# EUROPÄISCHE PATENTSCHRIFT

(11) **EP 3 702 850 B1**
(45) Veröffentlichungstag und Bekanntmachung des Hinweises auf die Patenterteilung: **17.02.2021**
(21) Anmeldenummer: 19159453.0
(22) Anmeldetag: 26.02.2019
(51) Int. Cl.: G05B 19/042, G05B 17/02

(54) **BEREITSTELLEN VON BETRIEBSPARAMETERN EINES AUTOMATISIERUNGSGERÄTS**
PROVISION OF OPERATING PARAMETERS OF AN AUTOMATION DEVICE
FOURNITURE DE PARAMÈTRES DE FONCTIONNEMENT D'UN APPAREIL D'AUTOMATISATION

(43) Veröffentlichungstag der Anmeldung: 02.09.2020
(73) Patentinhaber: SICK Stegmann GmbH, 78166 Donaueschingen (DE)
(72) Erfinder: Sellmer, Christian, 78166 Donaueschingen (DE); Hopp, David, 78166 Donaueschingen (DE); Brugger, Simon, 79853 Lenzkirch (DE); Wurdig, Frank, 78166 Donaueschingen (DE)
(74) Vertreter: Manitz Finsterwald Patent- und Rechtsanwaltspartnerschaft mbB

(56) Entgegenhaltungen:
- EP-A1- 2 299 341
- DE-A1-102016 000 100
- DE-A1-102016 121 145

## Beschreibung

Die vorliegende Erfindung betrifft ein Verfahren zum Bereitstellen von Betriebsparametern eines Automatisierungsgeräts.

Automatisierungsgeräte werden in Automatisierungssystemen eingesetzt, um automatisierte Prozesse zu steuern oder zu regeln. Derartige Automatisierungsgeräte können unter anderem Aktoren zur Beeinflussung des Automatisierungsprozesses, Sensoren zur Erfassung eines Zustands des Automatisierungsprozesses oder Steuergeräte zur Verarbeitung von Eingangssignalen der Sensoren und zur Erzeugung von Ausgangssignalen für die Aktoren sein.

Bei der Planung und Konfiguration von Automatisierungssystemen ist es notwendig, Automatisierungsgeräte auszuwählen, die sich für die Betriebsbedingungen des geplanten Automatisierungsprozesses eignen. Insbesondere müssen die Betriebsbedingungen innerhalb spezifizierter Grenzwerte von Betriebsparametern der ausgewählten Automatisierungsgeräte liegen. Die Betriebsparameter geben beispielsweise Umgebungsbedingungen, unter denen das Automatisierungsgerät eingesetzt werden kann, elektrische Kenngrößen der durch die Automatisierungsgeräte verarbeiteten Eingangs- und Ausgangssignale, beispielsweise Spannungsbereiche oder Rauschwerte, oder Fehlergrenzen bei der Erfassung von Eingangsgrößen oder bei der Ausgabe von Ausgangsgrößen an.

Üblicherweise beeinflussen sich die Betriebsparameter der Automatisierungsgeräte gegenseitig. Daher werden die Grenzwerte der einzelnen Betriebsparameter vom Hersteller des Automatisierungsgeräts in der Regel jeweils derart spezifiziert und in den Datenblättern der Automatisierungsgeräte angegeben, dass die Grenzwerte der einzelnen Betriebsparameter über die gesamten spezifizierten Parameterbereiche der übrigen Betriebsparameter gültig sind. Dies garantiert, dass das Automatisierungsgerät auch noch unter Betriebsbedingungen eingesetzt werden kann, in denen die Parameterwerte mehrerer oder aller Betriebsparameter ihren jeweiligen spezifizierten Grenzwert annehmen.

Druckschrift DE 10 2016 121145 A1 beschreibt eine Auswahlvorrichtung zur automatisierten Auswahl eines Elektromotorsystems aus mehreren vorgegebenen Elektromotorsystemen, wobei in der Auswahlvorrichtung starr vorgegebene Spezifikationsdaten mehrerer Elektromotoren und Verstärker hinterlegt sind.

Es ist Aufgabe der Erfindung ein Verfahren anzugeben, welches eine bedarfsgerechte und flexible Auswahl eines Automatisierungsgeräts für einen Automatisierungsprozess ermöglicht.

Diese Aufgabe wird durch ein Verfahren gemäß dem unabhängigen Anspruch gelöst. Weiterbildungen sind in den abhängigen Ansprüchen angegeben.

Im Rahmen der Erfindung wurde erkannt, dass eine bedarfsgerechte und flexible Auswahl des Automatisierungsgeräts dadurch ermöglich wird, dass als Grenzwert des zweiten Betriebsparameter kein starrer Wert spezifiziert wird, der über einen gesamten zulässigen Parameterbereich des ersten Betriebsparameters gültig ist, sondern ein variabler Grenzwert, der in Abhängigkeit eines vorgegebenen Zielwerts des ersten Betriebsparameters automatisiert durch das Konfigurationssystem errechnet wird. Dies ermöglicht es beispielsweise, besonders große oder kleine Zielwerte des ersten Betriebsparameters zu spezifizieren, wobei der Grenzwert des zweiten Betriebsparameters im Gegenzug bei seiner Berechnung derart beschränkt wird, dass das Automatisierungsgerät insgesamt betriebsfähig bleibt. Beispielsweise kann erfindungsgemäß berechnet werden, dass ein für den Einsatz vorgesehener Encoder ein Messrauschen aufweist, das unter einem durch den Benutzer vorgegebenen Zielwert liegt, solange ein Maximalwert einer Betriebstemperatur nicht überschritten wird. Dabei stellt das Messrauschen den ersten Betriebsparameter, die Betriebstemperatur den zweiten Betriebsparameter und der Maximalwert der Betriebstemperatur den berechneten Grenzwert des zweiten Betriebsparameter dar. Der durch den Benutzer vorgegebene Maximalwert des Messrauschens kann deutlich geringer sein, als standardmäßig im Datenblatt des Encoders angegeben, da sich das standardmäßig angegebene Messrauschen auf viel höhere Betriebstemperaturen bezieht.

Ein somit erzielter Vorteil ist, dass z.B. auf einen teureren oder genaueren Encoder verzichtet werden kann, da festgestellt werden kann, dass bei der geplanten Einsatztemperatur auch der geplante Encoder eingesetzt werden kann und trotzdem das gewünschte niedrige Messrauschen liefert.

Insbesondere kann ein durch den Zielwert des ersten Betriebsparameters definierter Parameterbereich des ersten Betriebsparameters über die Benutzerschnittstelle selektiv aufgeweitet und im Gegenzug ein durch den Grenzwert des zweiten Betriebsparameters definierter Parameterbereich des zweiten Betriebsparameters eingeschränkt werden. Dies ermöglicht eine anwendungsspezifische Spezifikation des Automatisierungsgeräts. Im Ergebnis können Parameterwerte des ersten und zweiten Betriebsparameters in Form eines anwendungsspezifischen Datenblatts des Automatisierungsgeräts über die Benutzerschnittstelle ausgegeben werden (beispielsweise als PDF-Datei).

Obwohl vorstehend nur der erste Betriebsparameter und der zweite Betriebsparameter erwähnt werden, können, wie nachstehend noch erläutert wird, im Rahmen des Verfahrens auch mehrere erste Betriebsparameter vorgegeben werden und/oder der zweite Betriebsparameter bzw. mehrere zweite Betriebsparameter in Abhängigkeit von dem ersten Betriebsparameter bzw. den mehreren ersten Betriebsparametern berechnet werden.

Nach dem Berechnen des Grenzwerts des zweiten Betriebsparameters kann das Verfahren außerdem ein Bereitstellen von Konfigurationsdaten, welche den Zielwert des ersten Betriebsparameters und/oder den Grenzwert des zweiten Betriebsparameters umfassen und in dem Automatisierungsgerät zur Konfiguration hinterlegt werden, umfassen. Das Verfahren kann außerdem ein Anbinden des Automatisierungsgeräts an ein Automatisierungssystem zur Steuerung eines Automatisierungsprozesses umfassen, insbesondere nach Konfiguration mit den über die Benutzerschnittstelle bereitgestellten Konfigurationsdaten.

Das Automatisierungsgerät kann beispielsweise als ein Sensor, ein Aktor oder ein Steuergerät ausgebildet sein. Das Automatisierungsgerät kann bevorzugt dazu ausgebildet sein, über eine Datenleitung, insbesondere einen Feldbus an das Automatisierungssystem angebunden und mit weiteren Automatisierungsgeräten verbunden zu werden.

Das Automatisierungsgerät kann als Sensor insbesondere als ein Encoder, etwa als Motorencoder, ausgebildet sein. Der erste oder der zweite Betriebsparameter kann insbesondere eine Umgebungstemperatur bzw. eine Gerätetemperatur und der jeweilige andere Betriebsparameter ein elektronisches Rauschen oder eine Messungenauigkeit eines durch den Sensor ausgegebenen Sensorsignals sein. Der erste oder zweite Betriebsparameter kann auch eine Lebensdauer und der jeweilige andere Betriebsparameter eine Betriebsgröße des Automatisierungsgeräts, insbesondere eine Drehzahl, eine Stillstandzeit, eine Schwingbelastung, ein Verschmutzungsgrad o. ä., sein. Der erste oder zweite Betriebsparameter kann auch eine Gerätetoleranz, beispielsweise bezüglich einer Exzentrizität bei Anschluss an eine Motorwelle, und der jeweilige andere Betriebsparameter ein Fehlerwert des ausgegebenen Sensorsignals sein. Des Weiteren sind auch alle anderen Kombinationen der genannten Parameter möglich.

Das Konfigurationssystem kann als ein Datenverarbeitungssystem, beispielsweise als ein Webserver, ausgebildet sein. Die Benutzerschnittstelle kann beispielsweise als eine Webseitenschnittstelle ausgebildet sein, an die ein Benutzergerät, beispielsweise eine weitere Datenverarbeitungseinheit, über eine Datenverbindung angebunden werden kann. Der Zugriff auf die Webseitenschnittstelle kann durch das Benutzergerät beispielsweise mittels eines Webbrowsers erfolgen. Die Benutzerschnittstelle kann jedoch auch eine Eingabeeinheit und eine Ausgabeeinheit, insbesondere einen Bildschirm, umfassen, welche direkt an das Konfigurationssystem angebunden sind. Das Konfigurationssystem kann insbesondere bei einem Hersteller des Automatisierungsgeräts angeordnet sein und das Benutzergerät bei einem Kunden des Herstellers.

Das Berechnen des Grenzwerts des zweiten Betriebsparameters kann auf dem Konfigurationssystem erfolgen. Ebenso kann das Gerätemodell auf dem Konfigurationssystem, beispielsweise in einer Speichereinheit des Konfigurationssystems, hinterlegt sein. Das Konfigurationssystem kann ferner ein hinterlegtes Steuerprogramm zur Ausführung des Verfahrens umfassen.

Das Konfigurationssystem kann dazu ausgebildet sein, über die Benutzerschnittstelle zunächst eine Mehrzahl von Automatisierungsgeräten, beispielsweise mehrere Automatisierungsgeräte des gleichen Gerätetyps, zur Vorauswahl anzuzeigen, beispielsweise in einer Liste. Als die Vorauswahl kann eine Benutzereingabe über die Benutzerschnittstelle erfasst werden, mittels derer eines der angezeigten Automatisierungsgeräte ausgewählt wird.

Das Konfigurationssystem kann ferner dazu ausgebildet sein, über die Benutzerschnittstelle eine grafische Darstellung eines eingestellten Parameterwerts des ersten Betriebsparameters darzustellen, beispielsweise in Form eines Schiebereglers, und die Darstellung bei Änderung des eingestellten Parameterwerts über die Benutzerschnittstelle zu ändern. Als Zielwert kann dann der zum Zeitpunkt des Erfassens des Zielwerts eingestellte Parameterwert des ersten Betriebsparameters übernommen werden. Das Konfigurationssystem kann dazu ausgebildet sein, den Zielwert des ersten Betriebsparameters kontinuierlich zu erfassen und den berechneten Grenzwert des zweiten Betriebsparameters kontinuierlich über die Benutzerschnittstelle auszugeben, so dass bei Änderung des eingestellten Parameterwerts des ersten Betriebsparameters eine sofortige Änderung des Grenzwerts des zweiten Betriebsparameters dargestellt wird.

Der Grenzwert des zweiten Betriebsparameters kann über die Benutzerschnittstelle in Form eines Zahlenwerts oder als grafische Darstellung, beispielsweise ebenfalls als Schieberegler, ausgegeben werden.

Gemäß einer Ausführungsform kann an der Benutzerschnittstelle neben dem Zielwert des ersten Betriebsparameters auch ein vom Benutzer gewünschter Parameterwert des zweiten Betriebsparameters eingestellt oder eingegeben werden. Auf diese Weise kann der Benutzer z.B. spezifizieren, dass das Automatisierungsgerät bei einer Temperatur von maximal 40°C betrieben werden soll. Die Temperatur entspricht dabei dem Zielwert des ersten Betriebsparameters. Bei der Temperatur von maximal 40°C wird eine Messgenauigkeit bzw. Winkelauflösung von z.B. 0,001° gewünscht. Die gewünschte Messgenauigkeit entspricht dem gewünschten Parameterwert des zweiten Betriebsparameters.

Der Grenzwert des zweiten Betriebsparameters kann dann beispielsweise dadurch ausgegeben werden, dass er mit dem über die Benutzerschnittstelle eingestellten (gewünschten) Parameterwert des zweiten Betriebsparameters verglichen wird und eine unzulässige Abweichung des eingestellten (gewünschten) Parameterwerts von dem berechneten Grenzwert des zweiten Betriebsparameters über die Benutzerschnittstelle angezeigt wird. Dies kann insbesondere der Fall sein, wenn bei der eingegebenen Maximaltemperatur von 40°C maximal eine Messgenauigkeit von 0,05° erzielt werden kann. Die unzulässige Abweichung kann dann z.B. durch eine rote Markierung oder durch eine entsprechende Fehlermeldung angezeigt werden.

Neben dem Erfassen des Zielwerts des ersten Betriebsparameters des Automatisierungsgeräts kann das Verfahren auch ein Erfassen weiterer Zielwerte von weiteren ersten Betriebsparametern des Automatisierungsgeräts umfassen und der Grenzwert des zweiten Betriebsparameters kann zusätzlich in Abhängigkeit der weiteren Zielwerte berechnet werden. Analog kann das Verfahren neben dem Berechnen und Ausgeben des Grenzwerts des zweiten Betriebsparameters ein Berechnen und Ausgeben weiterer Grenzwerte weiterer zweiter Betriebsparameter in Abhängigkeit von den Zielwerten der ersten Betriebsparameter umfassen. Dabei können die Abhängigkeiten der zweiten Betriebsparameter von den ersten Betriebsparametern in dem Gerätemodell des Automatisierungsgeräts hinterlegt sein.

Der Grenzwert des zweiten Betriebsparameters kann in Form eines Datenblatts des Automatisierungsgeräts über die Benutzerschnittstelle ausgegeben werden, beispielsweise zum Download bereitgestellt werden. Das Datenblatt kann neben dem Grenzwert des zweiten Betriebsparameters auch den Zielwert des ersten Betriebsparameters und/oder Parameterwerte weiterer Betriebsparameter umfassen. Der Grenzwert des zweiten Betriebsparameters und/oder der Zielwert des ersten Betriebsparameters können beispielsweise jeweils als Grenzwerte von als zulässig spezifizierten Parameterbereichen des ersten Betriebsparameters bzw. des zweiten Betriebsparameters ausgegeben werden. Das Datenblatt kann zusätzlich allgemeine Informationen über das Automatisierungsgerät enthalten.

Der Grenzwert des zweiten Betriebsparameters wird erfindungsgemäß anhand des Gerätemodells derart berechnet, dass eine Kenngröße des Automatisierungsgeräts in einem zulässigen Wertebereich liegt, wenn das Automatisierungsgerät mit dem Zielparameter des ersten Betriebsparameters und dem Grenzwert des zweiten Betriebsparameters betrieben wird. Die Kenngröße des Automatisierungsgeräts kann beispielsweise eine Gerätetemperatur, eine Leistungsaufnahme, eine Messauflösung oder ähnliches sein.

Eine Weiterbildung des Verfahrens umfasst ein Bereitstellen von Konfigurationsdaten, die den Zielwert des ersten Betriebsparameters und/oder den Grenzwert des zweiten Betriebsparameters umfassen, zur Hinterlegung in dem Automatisierungsgerät. Dadurch kann das Automatisierungsgerät, insbesondere durch einen Endkunden, besonders einfach konfiguriert werden. Die Konfigurationsdaten können beispielsweise Konfigurationsparameter, beispielsweise eine Messauflösung, für ein durch das Automatisierungsgerät im Betrieb auszuführendes Steuerprogramm umfassen oder Sicherheitsparameter, beispielsweise eine Maximaltemperatur, deren Einhaltung durch das Automatisierungsgerät im Betrieb überwacht wird.

Eine Weiterbildung des Verfahrens umfasst ein Anbinden des Automatisierungsgeräts an ein Automatisierungssystem zur Steuerung eines Automatisierungsprozesses und ein Hinterlegen der Konfigurationsdaten in dem Automatisierungsgerät. Dadurch kann sichergestellt werden, dass das Automatisierungsgerät bei Einbau in einen Automatisierungsprozess derart konfiguriert ist, dass es eine durch den Zielwert des ersten Betriebsparameters und den Grenzwert des zweiten Betriebsparameters definierte Spezifikation einhält. Der Automatisierungsprozess kann insbesondere ein industrieller Automatisierungsprozess sein.

Bei einer Weiterbildung des Verfahrens umfasst das Erfassen des Zielwerts des ersten Betriebsparameters ein Einlesen eines den Zielwert umfassenden Messwerts des ersten Betriebsparameters über die Benutzerschnittstelle. Dies ermöglicht eine besonders einfache Eingabe des Zielwerts des ersten Betriebsparameters über die Benutzerschnittstelle.

Eine Weiterbildung des Verfahrens umfasst ein Messen des ersten Betriebsparameters in einem mit dem Automatisierungsgerät zu verbindenden Automatisierungsprozess. Die Messung kann bevorzugt dort vorgenommen werden, wo das Automatisierungsgerät in dem Automatisierungsprozess später platziert oder eingesetzt werden soll, wobei die Messung durch ein von dem Automatisierungsgerät separates Messgerät vorgenommen werden kann. Der gemessene erste Betriebsparameter kann dann bevorzugt automatisch verarbeitet werden, wodurch dann der Grenzwert des zweiten Betriebsparameters ebenfalls automatisch ausgegeben werden kann. Dadurch kann auf besonders einfache Weise sichergestellt werden, dass das Automatisierungsgerät derart spezifiziert und ausgewählt wird, dass es für die tatsächlich in dem Automatisierungsprozess vorherrschenden Betriebsbedingungen geeignet ist.

Eine Weiterbildung des Verfahrens umfasst ein Erfassen einer Auswahl des ersten Betriebsparameters über die Benutzerschnittstelle und ein Auswählen des zweiten Betriebsparameters durch das Konfigurationssystem anhand des Gerätemodells und auf Grundlage des ausgewählten ersten Betriebsparameters. Dadurch wird ermöglicht, den ersten Betriebsparameter, dessen Zielwert zur Spezifikation weiterer Betriebsparameter vorgegeben wird, flexibel und bedarfsgerecht auszuwählen. Insbesondere kann der erste Betriebsparameter als ein Betriebsparameter ausgewählt werden, bei dem ein im Rahmen einer Grundspezifikation vorgegebener Parameterwert inkompatibel mit den geplanten Betriebsbedingungen des Automatisierungsgeräts ist.

Analog kann das Verfahren auch ein Auswählen des zweiten Betriebsparameters in Abhängigkeit des ausgewählten ersten Betriebsparameters und/oder des erfassten Zielwerts des ersten Betriebsparameters umfassen, wobei der zweite Betriebsparameter anhand des hinterlegten Gerätemodells des Automatisierungsgeräts ausgewählt wird. Dies ermöglicht es, den zweiten Betriebsparameter automatisiert derart auszuwählen und anzupassen, dass ein Betrieb des Automatisierungsgeräts beim Zielwert des ersten Betriebsparameters möglich wird. Das Verfahren kann ferner umfassen, in entsprechender Weise eine Mehrzahl zweiter Betriebsparameter in Abhängigkeit von dem ausgewählten ersten Betriebsparameter und/oder dem erfassten Zielwert des ersten Betriebsparameters vorauszuwählen und über die Benutzerschnittstelle zur endgültigen Auswahl anzuzeigen.

Bei einer Weiterbildung des Verfahrens sind der erste und/oder der zweite Betriebsparameter Umgebungsparameter einer Einsatzumgebung des Automatisierungsgeräts, insbesondere eine Umgebungstemperatur, eine Umgebungsfeuchte, eine Umgebungsvibration, eine Umgebungserschütterung oder ähnliches.

Bei einer Weiterbildung des Verfahrens sind der erste und/oder der zweite Betriebsparameter Konfigurationsparameter des Automatisierungsgeräts, insbesondere eine Messauflösung, ein Messintervall, eine Antriebskraft, ein Antriebsdrehmoment oder ähnliches. Die Konfigurationsparameter können insbesondere in dem Automatisierungsgerät hinterlegt sein und bei einer Ausführung des Steuerprogramms des Automatisierungsgeräts berücksichtigt werden.

Bei einer Weiterbildung des Verfahrens ist die Benutzerschnittstelle als eine Webseitenschnittstelle ausgebildet. Dies ermöglicht einen besonders einfachen Zugriff auf das Konfigurationssystem, insbesondere aus räumlicher Entfernung. Die Webseitenschnittstelle kann beispielsweise Eingabemasken und/oder Schieberegler zur Vorgabe des ersten Betriebsparameters und/oder simultanen Ausgabe des zweiten Betriebsparameters bereitstellen.

Bei einer Weiterbildung des Verfahrens legt das hinterlegte Gerätemodell die Abhängigkeit des zweiten Betriebsparameters von dem ersten Betriebsparameter in einem mehrdimensionalen Parameterraum fest. Der mehrdimensionale Parameterraum kann insbesondere eine Mehrzahl voneinander abhängiger Betriebsparametern des Automatisierungsgeräts umfassen.

Bei einer Weiterbildung des Verfahrens legen der erste und der zweite Betriebsparameter einen Arbeitspunkt des Automatisierungsgeräts in dem Parameterraum fest.

Bei einer Weiterbildung des Verfahrens umfasst das Gerätemodell eine Liste mit einander zugeordneten Parameterwerten des ersten und zweiten Betriebsparameters und/oder einen funktionalen Zusammenhang zwischen dem ersten und dem zweiten Betriebsparameter. Dies ermöglicht ein einfaches Berechnen des zweiten Betriebsparameters. Umfasst das Gerätemodell die Liste einander zugeordneter Parameterwerte, so kann der Grenzwert des zweiten Betriebsparameters dadurch berechnet werden, dass der Zielwert des ersten Betriebsparameters in der Liste gesucht oder auf der Liste interpoliert und der zugeordnete Parameterwert des zweiten Betriebsparameters als Grenzwert ausgegeben wird. Umfasst das Gerätemodell den funktionalen Zusammenhang, so kann der zweite Betriebsparameter durch Auswertung dieses Zusammenhangs berechnet werden.

Bei einer Weiterbildung des Verfahrens umfasst das Gerätemodell ein Simulationsmodell des Automatisierungsgeräts, wobei das Simulationsmodell bevorzugt den ersten und/oder zweiten Betriebsparameter als Eingangsparameter umfasst. Dies ermöglicht es, auch komplexe Zusammenhänge zwischen dem ersten und zweiten Betriebsparameters bei der Berechnung zu berücksichtigen. Der zweite Betriebsparameter kann insbesondere ein Ausgangsparameter des Simulationsmodells sein. Das Simulationsmodell kann die physikalischen Zusammenhänge im Automatisierungsgerät wiedergeben und berechnen. Das Simulationsmodell kann auch als "digital twin" bezeichnet werden.

Bei einer Weiterbildung des Verfahrens wird der Grenzwert des zweiten Betriebsparameters mittels einer mit dem Simulationsmodell ausgeführten Parameteroptimierung unter Variation des zweiten Betriebsparameters berechnet. In diesem Fall kann der zweite Betriebsparameter insbesondere ein Eingangsparameter des Simulationsmodells sein. Im Rahmen der Parameteroptimierung kann insbesondere eine Kenngröße des Automatisierungsgeräts, etwa die Gerätetemperatur, als Optimierungsfunktion derart optimiert werden, dass sie in einem vorgegebenen zulässigen Wertebereich liegt.

Eine Weiterbildung des Verfahrens umfasst ein Ausgeben einer durch das Gerätemodell vorgegebenen Abhängigkeit des zweiten Betriebsparameters und/oder eines dritten Betriebsparameters von dem ersten Betriebsparameter über die Benutzerschnittstelle, um ein Betriebsverhalten des Automatisierungsgeräts darzustellen. Durch Ausgabe der Abhängigkeit kann insbesondere das Verhalten des Automatisierungsgeräts während eines Betriebs bei den durch den ersten Betriebsparameter vorgegebenen Umgebungsbedingungen simuliert werden. Der dritte Betriebsparameter kann insbesondere die Kenngröße des Automatisierungsgeräts sein, die bei der zur Berechnung des zweiten Betriebsparameters durchgeführten Parameteroptimierung betrachtet wird. Außerdem kann eine Variation des zweiten und/oder dritten Betriebsparameters bei Änderung des Zielwerts des ersten Betriebsparameters über die Benutzerschnittstelle ausgegeben und dargestellt werden.

Die Erfindung bezieht sich auch auf ein Konfigurationssystem zum Bereitstellen von Betriebsparametern eines Automatisierungsgeräts, wobei das Konfigurationssystem eine Benutzerschnittstelle, eine mit der Benutzerschnittstelle verbundene Datenverarbeitungseinheit und eine mit der Datenverarbeitungseinheit verbundene Speichereinheit umfasst. Die Datenverarbeitungseinheit ist dazu ausgebildet, über die Benutzerschnittstelle eine Vorauswahl des Automatisierungsgeräts und einen Zielwert eines ersten Betriebsparameters des Automatisierungsgeräts zu erfassen. Ferner ist die Datenverarbeitungseinheit dazu ausgebildet, einen Grenzwert eines zweiten Betriebsparameters des Automatisierungsgeräts in Abhängigkeit des Zielwerts des ersten Betriebsparameters zu berechnen, wobei die Abhängigkeit des zweiten Betriebsparameters von dem ersten Betriebsparameter anhand eines in der Speichereinheit hinterlegten Gerätemodells des Automatisierungsgeräts berechnet wird. Außerdem ist die Datenverarbeitungseinheit dazu ausgebildet, den Grenzwert des zweiten Betriebsparameters über die Benutzerschnittstelle auszugeben.

Das Konfigurationssystem ist insbesondere dazu ausgebildet, das erfindungsgemäße Verfahren auszuführen. Insofern beziehen sich alle Weiterbildungen und Vorteile, die im Zusammenhang mit dem erfindungsgemäßen Verfahren beschrieben werden, auch auf das Konfigurationssystem und umgekehrt. In dem Konfigurationssystem kann zur Ausführung des erfindungsgemäßen Verfahrens ein Steuerprogramm hinterlegt sein, welches Anweisungen zur Ausführung des Verfahrens enthält.

Die Erfindung wird nachfolgend anhand von Figuren erläutert. Dabei zeigen in jeweils schematischer Darstellung:
- Fig. 1: ein Konfigurationssystem zum Bereitstellen von Betriebsparametern eines Automatisierungsgeräts; und
- Fig. 2: ein Verfahren zum Bereitstellen von Betriebsparametern eines Automatisierungsgeräts über das Konfigurationssystem.

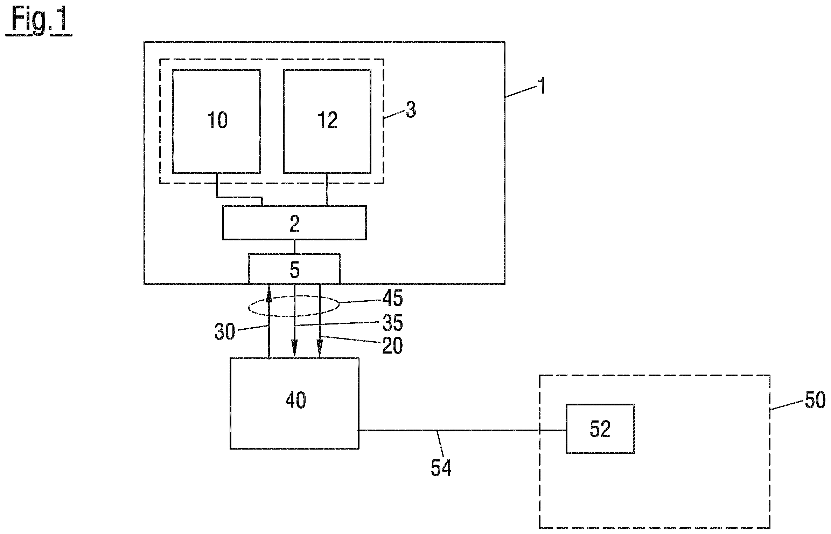

Fig. 1 zeigt ein Konfigurationssystem 1 zum automatisierten Bereitstellen von Betriebsparametern eines nicht dargestellten Automatisierungsgeräts. Das Konfigurationssystem 1 umfasst eine Datenverarbeitungseinheit 2 und eine mit der Datenverarbeitungseinheit 2 verbundene Benutzerschnittstelle 5. Außerdem umfasst das Konfigurationssystem 1 eine Speichereinheit 3, welche mit der Datenverarbeitungseinheit 2 verbunden ist und in der ein Gerätemodell 10 des Automatisierungsgeräts und weitere Gerätemodelle 12 weiterer Automatisierungsgeräte hinterlegt sind.

Ein Benutzergerät 40 ist über eine Datenverbindung 45, insbesondere über das Internet, mit der Benutzerschnittstelle 5 des Konfigurationssystems 1 verbunden. Über die Benutzerschnittstelle 5 erfasst das Konfigurationssystem 1 von dem Benutzergerät 40 einen Zielwert 30 eines ersten Betriebsparameters des Automatisierungsgeräts. Außerdem sendet das Konfigurationssystem 1 über die Benutzerschnittstelle 5 einen in Abhängigkeit des Zielwerts 30 berechneten Grenzwert 35 eines zweiten Betriebsparameters des Automatisierungsgeräts, sowie Konfigurationsdaten 20, die den Zielwert 30 des ersten Betriebsparameters und den Grenzwert 35 des zweiten Betriebsparameters umfassen, an das Benutzergerät 40.

Das Benutzergerät 40 ist ferner mit einem Sensor 52 verbunden, welcher wiederum über eine weitere Datenverbindung 54, insbesondere einen Feldbus, mit einem Automatisierungsprozess 50, in dem das Automatisierungsgerät eingesetzt werden soll, in Verbindung steht. Von dem Sensor 52 erhält das Benutzergerät 40 über die weitere Datenverbindung 54 einen Messwert des ersten Betriebsparameters, welchen es anschließend als den Zielwert 30 an das Konfigurationssystem 1 übermittelt. Bei dem Sensor 52 kann es sich um einen von dem Automatisierungsgeräts, dessen Betriebsparameter bereitgestellt werden sollen, verschiedenen Sensor handeln, beispielsweise um einen separaten Temperatursensor.

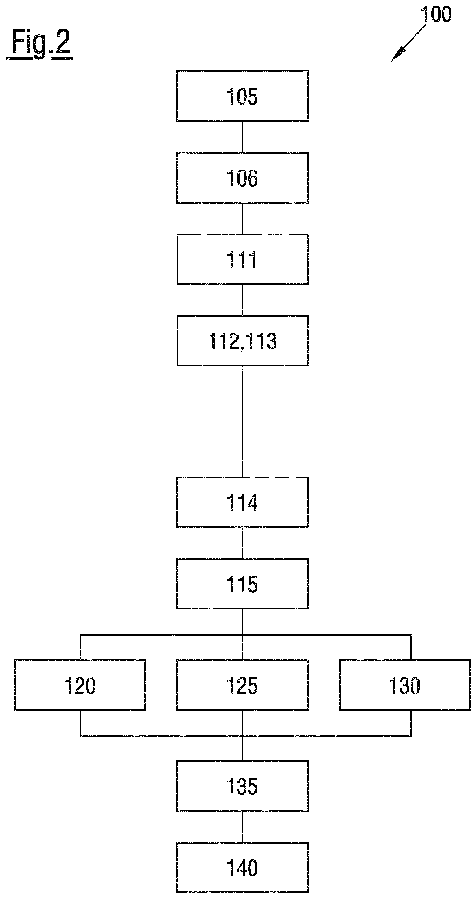

Fig. 2 zeigt ein Verfahren 100 zum Bereitstellen von Betriebsparametern des Automatisierungsgeräts durch das Konfigurationssystem 1. Das Verfahren 100 ist insbesondere in einem Steuerprogramm des Konfigurationssystems 1 hinterlegt.

Das Verfahren 100 umfasst ein Erfassen 105 einer Vorauswahl des Automatisierungsgeräts, dessen Betriebsparameter bereitgestellt werden sollen, über die Benutzerschnittstelle 5. Das Automatisierungsgerät wird insbesondere ausgewählt aus den Automatisierungsgeräten, deren Gerätemodelle 10, 12 in dem Konfigurationssystem 1 hinterlegt sind. Anschließend umfasst das Verfahren 100 ein Erfassen 106 einer Auswahl eines ersten Betriebsparameters, dessen Parameterwert mittels des Zielwerts 30 angepasst werden soll, über die Benutzerschnittstelle 5. Der erste Betriebsparameter wird dabei aus einer Mehrzahl von Betriebsparametern des zuvor ausgewählten Automatisierungsgeräts ausgewählt.

Das Verfahren 100 umfasst anschließend ein Messen 111 des Messwerts des ersten Betriebsparameters mittels des Sensors 52 und ein Erfassen 113 des Zielwerts 30 des ersten Betriebsparameters über die Benutzerschnittstelle 5 des Konfigurationssystems 1, indem ein Einlesen 112 des Messwerts über die Benutzerschnittstelle 5 erfolgt. Außerdem umfasst das Verfahren 100 ein Auswählen 114 des zweiten Betriebsparameters anhand des erfassten Zielwerts 30 des ersten Betriebsparameters.

Das Verfahren 100 umfasst ferner ein Berechnen 115 des Grenzwertes 35 des zweiten Betriebsparameters in Abhängigkeit des vorgegebenen Zielwerts 30 des ersten Betriebsparameters, und ein Ausgeben 120 des Grenzwertes 35 über die Benutzerschnittstelle 5. Außerdem umfasst das Verfahren 100 ein Bereitstellen 125 von Konfigurationsdaten, die den Zielwert 30 des ersten Betriebsparameters und den Grenzwert 35 des zweiten Betriebsparameters umfassen, und ein Ausgeben 130 einer Abhängigkeit des zweiten Betriebsparameters von dem ersten Betriebsparameter. Das Bereitstellen 125 und das Ausgeben 130 erfolgen dabei jeweils über die Benutzerschnittstelle 5. Schließlich umfasst das Verfahren 100 ein Hinterlegen 140 der ausgegebenen Konfigurationsdaten 20 in dem Automatisierungsgerät. Der Grenzwert 35 des zweiten Betriebsparameters und der Zielwert 30 des ersten Betriebsparameters werden in Form eines digitalen Datenblatts über die Benutzerschnittstelle 5 ausgegeben.

### Bezugszeichenliste

- 1: Konfigurationssystem
- 2: Datenverarbeitungseinheit
- 3: Speichereinheit
- 5: Benutzerschnittstelle
- 10: Gerätemodell
- 12: weitere Gerätemodelle
- 20: Konfigurationsdaten
- 30: Zielwert
- 35: Grenzwert
- 40: Benutzergerät
- 45: Datenverbindung
- 50: industrieller Automatisierungsprozess
- 52: Sensor
- 54: weitere Datenverbindung
- 51: erster Betriebsparameter
- 52: zweiter Betriebsparameter

- 100: Verfahren zum Bereitstellen von Betriebsparametern
- 105: Erfassen einer Vorauswahl des Automatisierungsgeräts
- 106: Erfassen einer Auswahl eines ersten Betriebsparameters
- 111: Messen eines Messwerts
- 112: Einlesen eines Messwerts
- 113: Erfassen eines Zielwerts eines ersten Betriebsparameters
- 114: Auswählen eines zweiten Betriebsparameters
- 115: Berechnen eines Grenzwerts eines zweiten Betriebsparameters
- 120: Ausgeben eines Grenzwerts
- 125: Bereitstellen von Konfigurationsdaten
- 130: Ausgeben einer Abhängigkeit
- 135: Anbinden an Automatisierungssystem
- 140: Hinterlegen von Konfigurationsdaten

## Patentansprüche

1. Verfahren (100) zum Bereitstellen von Betriebsparametern eines Automatisierungsgeräts über ein Konfigurationssystem (1), umfassend:
- Erfassen (105) einer Vorauswahl des Automatisierungsgeräts, dessen Betriebsparameter bereitgestellt werden sollen, über eine Benutzerschnittstelle (5) des Konfigurationssystems (1),
- Erfassen (113) eines Zielwerts (30) eines ersten Betriebsparameters des Automatisierungsgeräts über die Benutzerschnittstelle (5),
- Berechnen (115) eines Grenzwerts (35) eines zweiten Betriebsparameters des Automatisierungsgeräts in Abhängigkeit von dem Zielwert (30) des ersten Betriebsparameters,
wobei die Abhängigkeit des zweiten Betriebsparameters von dem ersten Betriebsparameter anhand eines Gerätemodells (10, 12) des Automatisierungsgeräts berechnet wird,
- Ausgeben (120) des Grenzwerts (35) des zweiten Betriebsparameters über die Benutzerschnittstelle (5) des Konfigurationssystems (1),
**dadurch gekennzeichnet,**
**dass** das Automatisierungsgerät (1) ausgewählt wird aus Automatisierungsgeräten, deren Gerätemodelle (10,12) in dem Konfigurationssystem (1) hinterlegt sind, und
**dass** der Grenzwert (35) des zweiten Betriebsparameters derart berechnet wird, dass eine Kenngröße des Automatisierungsgeräts in einem zulässigen Wertebereich liegt,
in welchem Bereich das Automatisierungsgerät insgesamt betriebsfähig bleibt,
wobei die Abhängigkeit der Kenngröße von dem zweiten Betriebsparameter anhand des Gerätemodells des Automatisierungsgeräts berechnet wird,
wenn das Automatisierungsgerät mit dem Zielwerl (30) des ersten Betriebsparameters und dem Grenzwert (35) des zweiten Betriebsparameters betrieben wird.

2. Verfahren (100) nach Anspruch 1, umfassend:
- Bereitstellen (125) von den Zielwert (30) des ersten Betriebsparameters und/oder den Grenzwert (35) des zweiten Betriebsparameters umfassenden Konfigurationsdaten (20) zur Hinterlegung in dem Automatisierungsgerät.

3. Verfahren (100) nach Anspruch 2, umfassend:
- Anbinden (135) des Automatisierungsgeräts an ein Automatisierungssystem zur Steuerung eines Automatisierungsprozesses,
- Hinterlegen (140) der Konfigurationsdaten (20) in dem Automatisierungsgerät.

4. Verfahren (100) nach einem der vorhergehenden Ansprüche,
wobei das Erfassen (113) des Zielwerts (30) des ersten Betriebsparameters ein Einlesen (112) eines den Zielwert (30) bildenden Messwerts des ersten Betriebsparameters über die Benutzerschnittstelle (5) umfasst.

5. Verfahren (100) nach Anspruch 4, umfassend
- Messen (111) des ersten Betriebsparameters in einem mit dem Automatisierungsgerät zu verbindenden Automatisierungsprozess.

6. Verfahren (100) nach einem der vorhergehenden Ansprüche, umfassend:
- Erfassen (106) einer Auswahl des ersten Betriebsparameters über die Benutzerschnittstelle (5),
- Auswählen (114) des zweiten Betriebsparameters durch das Konfigurationssystem (1) anhand des Gerätemodells (10, 12) und auf Grundlage des ausgewählten ersten Betriebsparameters.

7. Verfahren (100) nach einem der vorhergehenden Ansprüche,
wobei der erste und/oder der zweite Betriebsparameter Umgebungsparameter einer Einsatzumgebung des Automatisierungsgeräts sind, insbesondere eine Umgebungstemperatur, eine Umgebungsfeuchte, eine Umgebungsvibration oder eine Umgebungserschütterung.

8. Verfahren (100) nach einem der Ansprüche 1 bis 6,
wobei der erste und/oder der zweite Betriebsparameter Konfigurationsparameter des Automatisierungsgeräts sind, insbesondere eine Messauflösung, ein Messintervall, eine Antriebskraft oder ein Antriebsdrehmoment.

9. Verfahren (100) nach einem der vorhergehenden Ansprüche,
wobei die Benutzerschnittstelle (5) als eine Webseitenschnittstelle ausgebildet ist.

10. Verfahren (100) nach einem der vorhergehenden Ansprüche,
wobei das hinterlegte Gerätemodell (10, 12) die Abhängigkeit des zweiten Betriebsparameters von dem ersten Betriebsparameter in einem mehrdimensionalen Parameterraum festlegt.

11. Verfahren (100) nach Anspruch 10,
wobei der erste und der zweite Betriebsparameter einen Arbeitspunkt des Automatisierungsgeräts in dem Parameterraum festlegen.

12. Verfahren (100) nach einem der vorhergehenden Ansprüche,
wobei das Gerätemodell (10, 12) eine Liste mit einander zugeordneten Parameterwerten des ersten und zweiten Betriebsparameters umfasst und/oder
wobei das Gerätemodell (10, 12) einen funktionalen Zusammenhang zwischen dem ersten und dem zweiten Betriebsparameter umfasst.

13. Verfahren (100) nach einem der vorhergehenden Ansprüche,
wobei das Gerätemodell (10, 12) ein Simulationsmodell des Automatisierungsgeräts umfasst,
wobei das Simulationsmodell bevorzugt den ersten und/oder zweiten Betriebsparameter als Eingangsparameter umfasst.

14. Verfahren (100) nach einem Anspruch 13,
wobei der Grenzwert (35) des zweiten Betriebsparameters mittels einer mit dem Simulationsmodell ausgeführten Parameteroptimierung unter Variation des zweiten Betriebsparameters berechnet wird.

15. Verfahren (100) nach einem der vorhergehenden Ansprüche, umfassend:
- Ausgeben (130) einer durch das Gerätemodell (10, 12) vorgegebenen Abhängigkeit des zweiten Betriebsparameters und/oder eines dritten Betriebsparameters von dem ersten Betriebsparameter über die Benutzerschnittstelle (5), um ein Betriebsverhalten des Automatisierungsgeräts darzustellen.

## Claims

1. A method (100) of providing operating parameters of an automation device via a configuration system (1), comprising:
- detecting (105) a pre-selection of the automation device, whose operating parameters are to be provided, via a user interface (5) of the configuration system (1);
- detecting (113) a target value (30) of a first operating parameter of the automation device via the user interface (5);
- calculating (115) a limit value (35) of a second operating parameter of the automation device in dependence on the target value (30) of the first operating parameter,
wherein the dependence of the second operating parameter on the first operating parameter is calculated using a device model (10, 12) of the automation device; and
- outputting (120) the limit value (35) of the second operating parameter via the user interface (5) of the configuration system (1),
**characterized in that**
the automation device (1) is selected from automation devices whose device models (10, 12) are stored in the configuration system (1); and
**in that** the limit value (35) of the second operating parameter is calculated such that a characteristic of the automation device is in a reliable value range, in which range the automation device remains operable overall, with the dependence of the characteristic on the second operating parameter being calculated using the device model of the automation device when the automation device is operated with the target value (30) of the first operating parameter and with the limit value (35) of the second operating parameter.

2. A method (100) in accordance with claim 1, comprising:
- providing (125) configuration data (20) comprising the target value (30) of the first operating parameter and/or the limit value (35) of the second operating parameter for storage in the automation device.

3. A method (100) in accordance with claim 2, comprising:
- connecting (135) the automation device to an automation system to control an automation process; and
- storing (140) the configuration data (20) in the automation device.

4. A method (100) in accordance with any one of the preceding claims, wherein the detection (113) of the target value (30) of the first operating parameter comprises a reading (112) of a measured value of the first operating parameter, which forms the target value (30), via the user interface (5).

5. A method (100) in accordance with claim 4, comprising
- measuring (111) the first operating parameter in an automation process to be connected to the automation device.

6. A method (100) in accordance with any one of the preceding claims, comprising:
- detecting (106) a selection of the first operating parameter via the user interface (5); and
- selecting (114) the second operating parameter by the configuration system (1) with reference to the device model (10, 12) and on the basis of the selected first operating parameter.

7. A method (100) in accordance with any one of the preceding claims, wherein the first and/or second operating parameters is/are environmental parameters of a deployment environment of the automation device, in particular an environmental temperature, an environmental humidity, an environmental vibration or an environmental shock.

8. A method (100) in accordance with any one of the claims 1 to 6,
wherein the first and/or second operating parameters is/are configuration parameters of the automation device, in particular a measurement resolution, a measurement interval, a drive force or a drive torque.

9. A method (100) in accordance with any one of the preceding claims, wherein the user interface (5) is configured as a website interface.

10. A method (100) in accordance with any one of the preceding claims, wherein the stored device model (10, 12) fixes the dependence of the second operating parameter on the first operating parameter in a multidimensional parameter space.

11. A method (100) in accordance with claim 10,
wherein the first and second operating parameters fix a working point of the automation device in the parameter space.

12. A method (100) in accordance with any one of the preceding claims, wherein the device model (10, 12) comprises a list with mutually associated parameter values of the first and second operating parameters; and/or wherein the device model (10, 12) comprises a functional relationship between the first and second operating parameters.

13. A method (100) in accordance with any one of the preceding claims, wherein the device model (10, 12) comprises a simulation model of the automation device; and
wherein the simulation model preferably comprises the first and/or second operating parameters as input parameters.

14. A method (100) in accordance with claim 13,
wherein the limit value (35) of the second operating parameter is calculated by means of a parameter optimization carried out using the simulation module while varying the second operating parameter.

15. A method (100) in accordance with any one of the preceding claims, comprising:
- outputting (130) a dependence of the second operating parameter and/or of a third operating parameter predefined by the device model (10, 12) on the first operating parameter via the user interface (5) to present an operating behavior of the automation device.

## Revendications

1. Procédé (100) pour fournir des paramètres de fonctionnement d'un appareil d'automatisation via un système de configuration (1), consistant à :
- acquérir (105), via une interface utilisateur (5) du système de configuration (1), une présélection de l'appareil d'automatisation dont les paramètres de fonctionnement doivent être fournis,
- acquérir (113), via l'interface utilisateur (5), une valeur cible (30) d'un premier paramètre de fonctionnement de l'appareil d'automatisation,
- calculer (115) une valeur limite (35) d'un deuxième paramètre de fonctionnement de l'appareil d'automatisation en fonction de la valeur cible (30) du premier paramètre de fonctionnement,
la dépendance du deuxième paramètre de fonctionnement par rapport au premier paramètre de fonctionnement étant calculée à l'aide d'un modèle d'appareil (10, 12) de l'appareil d'automatisation,
- émettre (120), via l'interface utilisateur (5) du système de configuration (1), la valeur limite (35) du deuxième paramètre de fonctionnement,
**caractérisé en ce que**
l'appareil d'automatisation (1) est sélectionné parmi des appareils d'automatisation dont les modèles d'appareil (10, 12) sont stockés dans le système de configuration (1), et **en ce que**
la valeur limite (35) du deuxième paramètre de fonctionnement est calculée de telle sorte qu'une grandeur caractéristique de l'appareil d'automatisation se situe dans une plage de valeurs admissible, plage dans laquelle l'appareil d'automatisation reste opérationnel dans son ensemble, la dépendance de la grandeur caractéristique par rapport au deuxième paramètre de fonctionnement étant calculée à l'aide du modèle d'appareil de l'appareil d'automatisation lorsque l'appareil d'automatisation est exploité avec la valeur cible (30) du premier paramètre de fonctionnement et avec la valeur limite (35) du deuxième paramètre de fonctionnement.

2. Procédé (100) selon la revendication 1, consistant à :
- fournir (125) des données de configuration (20) comprenant la valeur cible (30) du premier paramètre de fonctionnement et/ou la valeur limite (35) du deuxième paramètre de fonctionnement, pour les stocker dans l'appareil d'automatisation.

3. Procédé (100) selon la revendication 2, consistant à :
- connecter (135) l'appareil d'automatisation à un système d'automatisation pour contrôler un processus d'automatisation,
- stocker (140) les données de configuration (20) dans l'appareil d'automatisation.

4. Procédé (100) selon l'une des revendications précédentes,
dans lequel
l'acquisition (113) de la valeur cible (30) du premier paramètre de fonctionnement comprend la lecture (112) d'une valeur mesurée, constituant la valeur cible (30), du premier paramètre de fonctionnement via l'interface utilisateur (5).

5. Procédé (100) selon la revendication 4, consistant à :
- mesurer (111) le premier paramètre de fonctionnement dans un processus d'automatisation à associer à l'appareil d'automatisation.

6. Procédé (100) selon l'une des revendications précédentes, consistant à :
- acquérir (106) une sélection du premier paramètre de fonctionnement via l'interface utilisateur (5),
- sélectionner (114) le deuxième paramètre de fonctionnement par le système de configuration (1) à l'aide du modèle de l'appareil (10, 12) et sur la base du premier paramètre de fonctionnement sélectionné.

7. Procédé (100) selon l'une des revendications précédentes,
dans lequel
le premier et/ou le deuxième paramètre de fonctionnement sont des paramètres environnementaux d'un environnement d'utilisation de l'appareil d'automatisation, en particulier une température ambiante, une humidité ambiante, une vibration ambiante ou des secousses ambiantes.

8. Procédé (100) selon l'une des revendications 1 à 6,
dans lequel
le premier et/ou le deuxième paramètre de fonctionnement sont des paramètres de configuration de l'appareil d'automatisation, en particulier une résolution de mesure, un intervalle de mesure, une force d'entraînement ou un couple d'entraînement.

9. Procédé (100) selon l'une des revendications précédentes,
dans lequel
l'interface utilisateur (5) est réalisée sous forme d'interface de page web.

10. Procédé (100) selon l'une des revendications précédentes,
dans lequel
le modèle d'appareil (10, 12) stocké spécifie la dépendance du deuxième paramètre de fonctionnement par rapport au premier paramètre de fonctionnement dans un espace de paramètres multidimensionnel.

11. Procédé (100) selon la revendication 10,
dans lequel
les premier et deuxième paramètres de fonctionnement définissent un point de travail de l'appareil d'automatisation dans l'espace de paramètres.

12. Procédé (100) selon l'une des revendications précédentes,
dans lequel
le modèle d'appareil (10, 12) comprend une liste de valeurs de paramètres, associées les unes aux autres, des premier et deuxième paramètres de fonctionnement, et/ou
le modèle d'appareil (10, 12) comprend une relation fonctionnelle entre les premier et deuxième paramètres de fonctionnement.

13. Procédé (100) selon l'une des revendications précédentes,
dans lequel
le modèle d'appareil (10, 12) comprend un modèle de simulation de l'appareil d'automatisation, et
le modèle de simulation comprend de préférence le premier et/ou le deuxième paramètre de fonctionnement comme paramètre d'entrée.

14. Procédé (100) selon la revendication 13,
dans lequel
la valeur limite (35) du deuxième paramètre de fonctionnement est calculée au moyen d'une optimisation des paramètres effectuée avec le modèle de simulation tout en faisant varier le deuxième paramètre de fonctionnement.

15. Procédé (100) selon l'une des revendications précédentes, consistant à :
- émettre (130), via l'interface utilisateur (5), une dépendance, prédéterminée par le modèle d'appareil (10, 12), du deuxième paramètre de fonctionnement et/ou d'un troisième paramètre de fonctionnement par rapport au premier paramètre de fonctionnement pour représenter un comportement de fonctionnement de l'appareil d'automatisation.
